# EUROPEAN PATENT APPLICATION

(11) **EP 0 655 202 A1**
(43) Date of publication of application: **31.05.1995**
(21) Application number: 94830003.3
(22) Date of filing: 11.01.1994
(51) Int. Cl.: A23C 9/133

(54) **Yogurt having healty components**

(30) Priority: 24.11.1993 IT MI932489
(71) Applicant: SITIA-YOMO S.p.A., I-20139 Milano (IT)
(72) Inventor: Cavaliere Vesely, Renata, I-20139 Milano (IT); Giani, Giovanni, I-20139 Milano (IT); Cingoli, Vittorio, I-20139 Milano (IT); Maiocchi, Gianluigi, I-20139 Milano (IT)
(74) Representative: Cicogna, Franco

(57) **Abstract**

The present invention relates to an yogurt including components having healthy functions, the main feature of which is that it comprises lean yogurt sugared with 9.4% saccharose, mixed with natural mash and fruit juices and with natural extracts obtained by a full extraction from raw vegetable materials, in order to provide a high contents of active or characteristic principles.

## Description

### BACKGROUND OF THE INVENTION

The present invention relates to a yogurt having healthy components.

As is known, yogurt is conventionally made by means of a fermentation method carried on milk added with coagulative products.

To the thus made yogurt there are conventionally added other elements, usually fruit pieces, having the function of modifying the flavour of the yogurt so as to render it more pleasant and agreeable.

The yogurt formulations which are made at present, however, do not provide a product joining to the typical features of the yogurt some healthy functions.

### SUMMARY OF THE INVENTION

Accordingly, the aim of the present invention is to provide a yogurt including components having healthy functions, thereby providing an actually natural and healthy food.

Within the scope of the above mentioned aim, a main object of the present invention is to provide such a yogurt which can be made exclusively by using healthy components, that is by omitting any flavour products.

Another object of the present invention is to provide such a yogurt which, owing to its peculiar structural features, is adapted to greatly improve its organoleptic properties.

Yet another object of the present invention is to provide a yogurt which includes several healthy features, depending on the combination of its components.

According to one aspect of the present invention, the above mentioned aim and objects, as well as yet other objects, which will be more apparent hereinafter, are achieved by a yogurt including components heaving healthy functions, characterized in that it comprises a lean yogurt, sugared by 9.4% saccharose, and being mixed with mash and fruit juices and with natural extracts, obtained by a full extraction of highly concentrated vegetable raw materials, so as to provide a high contents of active or characteristic principles.

### DESCRIPTION OF A PREFERRED EMBODIMENT

Further characteristics and advantages of the present invention will become more apparent from the following detailed disclosure of a preferred embodiment of the subject yogurt including components having healthy functions.

In particular the yogurt according to the present invention is made by mixing with a lean yogurt, which has been sugared by 9.4% saccharose, a homogeneous fruit material or vegetable original natural extracts.

The homogeneous fruit material usually comprises natural mash and fruit juices, selected with such doses and types to provide a great improving of the overall organoleptic and healthy properties.

The natural extracts, in particular, are obtained by a full extraction method carried out on vegetable raw materials, which method provides a solution which is then subjected to a thermal processing and concentrated to a level as great as possible, so as to provide natural extracts having very high contents of active or characteristic principles.

The combination of the above indicated elements provides a possibility of making several different types of yogurt.

Thus, for example, it is possible to make a tonic yogurt by adding to the lean yogurt a bilberry mash and juice, in an amount of 11.53 grams for 100 grams of yogurt.

Moreover, as a natural extract, there is used ginseng in a dose of 60 mg for 125 grams of yogurt.

In order to make a tranquilizing yogurt there is used the passiflora fruit, by using the juice thereof in a dose of 8.93 grams for 100 grams of yogurt.

To the tranquilizing yogurt, in particular, there is added a mixture of natural extracts comprising 100 mg of camomille, 60 mg of passiflora and 60 mg of hawthorn, considered as an extract, so as to obtain 220 mg of an extract to be joined to 125 grams of yogurt.

In order to make a refreshing yogurt, there is used fruit comprising a plum mash and juice in a dose of 10.80 grams for 100 grams of yogurt.

To the yogurt there are then added natural extracts comprising 80 mg of rhubarb and 10 mg of strawberry, in order to obtain 90 mg of natural extracts, for 125 grams of yogurt.

The above mentioned doses provide the possibility of making a yogurt having actually novel healthy properties.

The specific formulations and processing methods of the above new yogurts assure a high contents of active and characteristic principles, contained in the natural extracts, in a significative amount and this up to the commercial expiring date of the yogurt, which is usually of 30 days from the making date.

Moreover, the use in the yogurts of natural extracts of a vegetable origin and of fruit allows to omit the use of any other flavoring substances.

From the above it should be apparent that the invention fully achieves the intended aim and objects.

In particular, the fact is to be pointed out that a new type of yogurt has been provided which remarkably broadens the range of the yogurt products which are at present available on the market.

The invention as disclosed is susceptible to several modifications and variations, all of which will come within the scope of the inventive idea.

Moreover, all of the details can be replaced by other technically equivalent elements.

## Claims

1. A yogurt including components heaving healthy functions, characterized in that it comprises a lean yogurt, sugared by 9.4% saccharose, and being mixed with mash and fruit juices and with natural extracts, obtained by a full extraction of highly concentrated vegetable raw materials, so as to provide a high contents of active or characteristic principles.

2. A yogurt according to Claim 1, characterized in that it comprises a tonic yogurt including bilberry mash and juice in a dose of 11.53 grams for 100 grams of yogurt and natural extracts including ginseng in a dose of 60 mg for 125 grams of yogurt.

3. A yogurt according to Claims 1 and 1, characterized in that it comprises a tranquilizing yogurt including a passiflore juice in a dose of 8.93 grams for 100 grams of yogurt and natural extracts including 100 mg of camomille, 60 mg of passiflore, to provide a total of 220 mg of extracts for 125 grams of yogurt.

4. A yogurt according to one or more of the preceding claims, characterized in that it comprises a refreshing yogurt, including a plum mash and juices in a dose of 10.80 grams for 100 grams of yogurt, with natural extracts including 80 mg of rhubarb and 10 mg of strawberry, for a total amount of 90 mg for 125 grams of yogurt.
